# EUROPÄISCHE PATENTANMELDUNG

(11) **EP 1 302 593 A1**
(43) Veröffentlichungstag der Anmeldung: **16.04.2003**
(21) Anmeldenummer: 01124571.9
(22) Anmeldetag: 15.10.2001
(51) Int. Cl.: E01C 5/22, E01C 13/04, E04F 15/02

(54) **Flächiges Belagsmaterial**

(71) Anmelder: Formtech AG, 8492 Wila (CH)
(72) Erfinder: Meyer Helmuth, 6319 Allenwinden (CH)
(74) Vertreter: Patentanwälte Schaad, Balass, Menzl & Partner AG

(57) **Zusammenfassung**

Die vorliegende Erfindung betrifft ein flächiges Belagsmaterial mit einer Grundschicht, einer Deckschicht und einer zwischen Grundschicht und Deckschicht angeordneten Zwischenschicht, wobei die Zwischenschicht wenigstens ein elastisches Element enthält, das aus einem flächigen Material hergestellt worden ist. Dieses elastische Element verformt sich bei Druckeinwirkung auf die Deckschicht reversibel. Ausserdem bildet das elastische Element innerhalb der Zwischenschicht alleine oder mit wenigstens einem anderen Element oder in Verbindung mit der Grundschicht und/oder der Deckschicht wenigstens einen Hohlraum aus. Ferner betrifft die vorliegende Erfindung ein Verfahren zur Herstellung eines Belagsmaterials.

## Beschreibung

Die vorliegende Erfindung betrifft ein flächiges Belagsmaterial gemäss dem Oberbegriff des Patentanspruch 1 und ein Verfahren zur Herstellung desselben.

Fallschutzplatten werden vor allem auf Pausenplätzen und Spielplätzen eingesetzt, wie zum Beispiel unter Klettergerüsten. Sie sollen Kinder vor Verletzungen schützen, falls diese vom Gerüst fallen sollten.

Herkömmliche Fallschutzplatten bestehen aus zwei Schichten. Auf der Unterseite haben herkömmliche Fallschutzplatten eine deutliche Profilierung. Mit der Zeit wird der Untergrund verhärtet oder es kommt zu einer Vererdung der Profilierung. Dadurch vermindert sich die kraftabbauende Eigenschaft im Laufe der Zeit. Durch die Profilierung wird auch ein Untergrund wie Kies mit der Zeit unregelmässig verteilt. Längerfristig können sich dadurch die Fallschutzplatten verschieben und liegen nicht mehr plan.

Elastikplatten haben eine dämpfende Wirkung und werden vorzugsweise auf Vorplätzen, Sitzplätzen, Terrassen, Balkonen, Gehwegen, Freizeit-, Spiel- und Sportplätzen eingesetzt.

Aufgabe der vorliegenden Erfindung ist die Bereitstellung eines flächigen Belagsmaterials, das über lange Zeit gleichbleibende Dämpfungseigenschaften aufweist und kostengünstig herzustellen ist.

Die Aufgabe wird gelöst durch ein flächiges Belagsmaterial mit den Merkmalen von Anspruch 1 und ein Verfahren zur Herstellungen eines flächigen Belagsmaterials mit den Merkmalen von Anspruch 11. Weitere vorteilhafte Ausführungen der Erfindung ergeben sich aus den abhängigen Ansprüchen, der Beschreibung und den Zeichnungen.

Die stossdämpfende Wirkung des flächigen Belagsmaterials wird durch eine zwischen Grund- und Deckschicht angeordnete Zwischenschicht mit wenigstens einem elastischen Element erzielt, das sich bei Druckeinwirkung auf die Deckschicht verformt und nach dem Wegfallen der Druckeinwirkung seine ursprüngliche Form wieder einnimmt. Wenigstens ein elastisches Element innerhalb der Zwischenschicht alleine oder mit wenigstens einem anderen elastischen Element zusammen oder in Verbindung mit der Grundschicht und/oder der Deckschicht bildet einen Hohlraum. Ein Hohlraum muss nicht zwingend allseitig geschlossen sein. Durch die Hohlräume und das wenigstens eine elastische Element kann das Belagsmaterial auf äusseren Druck besonders gut mit einer elastischen Verformung reagieren. Ein Stoss wird abgefedert, was den Kraftabbau begünstigt.

Verschmutzungen, die früher die stossdämpfende Wirkung vermindert haben, können nicht mehr auftreten, da die Hohlräume bei verlegtem Belagsmaterial von aussen nicht zugänglich sind. Ausserdem ist das erfindungsgemässe Belagsmaterial schwingungsdämmend, schalldämmend und bietet einen erhöhten Komfort.

Durch die erfindungsgemässen Bodenplatten können die Transportkosten signifikant reduziert werden, da die Hohlräume eine massive Gewichtsreduktion zur Folge haben.

In einer bevorzugten Ausführungsform grenzen wenigstens zwei Hohlräume aneinander. Vorzugsweise sind diese benachbarten Hohlräume in der Lage miteinander zu kommunizieren. Ein verzögerter Luftausgleich der miteinander kommunizierenden Hohlräume führt zu einer zusätzlichen stossdämpfenden Wirkung des Belagsmaterials. Dadurch ist das Belagsmaterial den bisher bekannten Fallschutzplatten deutlich überlegen.

Das erfindungsgemässe Belagsmaterial ist ausserdem in der Lage, Schall zu absorbieren.

In einer bevorzugten Ausführungsform enthält die Zwischenschicht mehrere Lagen, die jeweils wenigstens ein elastisches Element enthalten. Dadurch werden stark beanspruchte Stellen besser stabilisiert. Das elastische Element der untersten Lage kann unmittelbar unter dem elastischen Element der darüberliegenden Lage liegen oder versetzt zueinander angeordnet sein. Das elastische Element der unteren Lage wird vorzugsweise mit dem elastischen Element der darüberliegenden Lage so verbunden, dass das in der darüberliegenden Lage liegende elastische Element das untere so begrenzt, dass ein Hohlraum ausgebildet wird. Dadurch wird die Dämpfungseigenschaften des erfindungsgemässen Belagsmaterials erhöht, was dessen Einsatz als stossdämpfender Schutzbelag für hohe Fallhöhen ermöglicht.

Die elastischen Elemente können aus den verschiedensten elastischen Materialien hergestellt werden, vorzugsweise werden jedoch Materialien verwendet, die sich recyclieren lassen, wie z.B. Elastomere (d.h. Polymere mit gummielastischem Verhalten), Metalle (gewalzte, Metallgewebe, Maschendraht) oder Holz. Die Elastomere werden bevorzugt ausgewählt aus der Gruppe von Acrylatkautschuk, Ethylen-Propylen-Dien-Terpolymer (EPDM), Polyester-Urethankautschuk, Polybutadien, Ethylen-Acrylate-Kautschuk, Polyether-Urethan-Kautschuk, Ethylen-Vinylacetat-Copolymere, Fluorkautschuk, Butylkautschuk, Nitrilkautschuk, Naturkautschuk, synthetisches Polyisopren und Styrolbutadien-Kautschuk sowie Mischungen davon. Die irreversibel vernetzten Elastomere, die durch Vulkanisieren von Kunststoffen mit elastischen Eigenschaften hergestellt werden sind besonders bevorzugt, da diese ausgezeichnete Dämpfungseigenschaften aufweisen.

Die elastischen Elemente werden aus einem flächigen Material hergestellt. Flächige Materialien aus den oben genannten Elastomeren lassen sich auch in beliebigen Dicken kostengünstig durch Extrudieren herstellen. Die flächigen Materialien werden zum Beispiel in Bahnen aufgewickelt und vor der Verwendung rationell gestanzt. Die Stanzteile werden zu der gewünschten Form zusammengefügt, respektive mit einem dauerelastischen und witterungsbeständigen Kleber verklebt.

Die Zwischenschicht enthält neben den elastischen Elementen beispielsweise zusätzlich metallische Elemente. Denkbar sind metallische Elemente wie Springfedern, die die stossdämpfenden Eigenschaften des erfindungsgemässen Bodenbelags noch verstärken.

Vorzugsweise werden innerhalb der Zwischenschicht Verstärkungselemente wie z. Bsp. Vlies, Filme oder Netze angeordnet, die ein Überdehnen des wenigstens einen elastischen Elementes bei Überschreiten eines vorbestimmten Druckes verhindern. Einer Materialermüdung der elastischen Elemente kann somit entgegengewirkt und die Lebensdauer des Belagsmaterials erhöht werden. Diese Verstärkungselemente verhindern ausserdem ein irreversibels Ineinanderdrücken der übereinanderliegenden elastischen Elemente.

Die elastischen Elemente können aneinander durch Verbindungsstücke wie Klammern, Bolzen etc. aus Metall oder Kunststoff oder durch spezielle ineinandergreifende Formen/Konturen befestigt werden. Dadurch kann einem seitlichen Verrutschen entgegengewirkt werden. Alternativ kann eine solche Befestigung auch durch Umspannen mit Textilien erreicht werden.

Die elastische Deckschicht, die ein- oder mehrlagig sein kann, begrenzt die Zwischenschicht nach oben. Durch das Begrenzen nach oben können einerseits die oben erwähnten Hohlräume gebildet werden, auf der anderen Seite lässt sich die Oberfläche der Deckschicht beliebig gestalten. Vorzugsweise weist die elastische Deckschicht eine feingliedrige Oberflächenstruktur auf. Durch eine solche Oberflächenstruktur kann beispielsweise die Sicherheit erhöht werden oder ästhetische Bedürfnisse können befriedigt werden. Mögliche Oberflächenstrukturen sind alle denkbaren geometrischen Formen und Kombinationen wie Dreiecke, Kreise, Rechtecke, Hantelform, Wabenform, Logos, Tierformen etc., die durch beispielsweise Ausstanzen und Aufkleben, Ausfräsen, Ausschneiden oder durch Siebdruck auf die Oberfläche der elastischen Deckschicht aufgebracht werden können. Durch die Deckschicht ist es nicht möglich, elastische Elemente zu entfernen, was eine Vandalismus bedingte Zerstörung erschwert.

Die Deckschicht besteht vorzugsweise aus Ethylen-Propylen-Dien-Terpolymeren (EPDM). Diese weisen sich durch hohe Beständigkeit gegenüber der Einwirkung von Licht, Hitze, Sauerstoff und Ozon aus. Alternativ kann die Deckschicht auch aus natürlichen und synthetischen Kautschuken oder Kunststoffen wie Polyvinylchlorid, Polyethylenterephthalat oder Mischungen davon bestehen. Innerhalb der Deckschicht können beispielsweise auch Verstärkungselemente angeordnet sein, wie zum Beispiel Vlies, Folien oder Netze, was einer Materialermüdung entgegenwirkt und damit die Lebensdauer des Belagsmaterials erhöht. Ausserdem wird durch die Verstärkungselemente der Druck besser auf der Fläche verteilt und das Belagsmaterial wird statisch verstärkt. Der Einsatz von Verstärkungselementen beugt zusätzlich dem Vandalismus vor. Für Belagsmaterialien, die draussen verwendet werden sollen, werden in die Deckschicht vorzugsweise noch UV-Stabilisatoren eingearbeitet, was zu einer Erhöhung der Lebensdauer führt.

Die Grundschicht besteht vorzugsweise aus Kunststoffen, Kunststoffmischungen, synthetischem oder natürlichem Kautschuk, Textilien oder Metallen. Besonders bevorzugt sind synthetische und natürliche Kautschuke, Ethylenvinylacetat, TPU (thermoplastisches Polyurethan) oder Polypropylen. Dabei wird Material und Form der Grundschicht dem Untergrund angepasst. Die Grundschicht ist an der Unterseite vorzugsweise plan. Dadurch können über eine lange Zeit gleichbleibende Dämpfungseigenschaften oder kraftabbauende Eigenschaften gewährleistet werden, da der Untergrund nicht verhärtet. Die Grundschicht schützt ausserdem die Zwischenschicht und damit das Dämpfungssystem des erfindungsgemässen Bodenbelags.

Die Grundschicht und/oder die Zwischenschicht enthalten vorzugsweise Verbindungselemente zum Verbinden zweier Belagsmaterialien. Beispiele für diese Verbindungselemente sind Formteile mit entsprechenden Konturen, wie beispielsweise ein Schwalbenschwanz.

Das erfindungsgemässe Belagsmaterial wird nach individuellen Bedürfnissen vorzugsweise auf Spiel- und Sportplätzen, auf Balkonen und Flachdächern sowie als ergonomische Steharbeitsplatzmatten verwendet. Es kann zudem als Schutz für Sporthallenbeläge eingesetzt werden. Ein weiterer sinnvoller Einsatzbereich ist die Tierhaltung bzw. der Tiertransport am Boden und im Wandbereich (Prallschutz).

Weitere Merkmale und Vorteile der Erfindung werden nachfolgend anhand von in den Figuren dargestellten Ausführungsbeispielen erläutert.

Es zeigen rein schematisch:
- Fig. 1A bis 1E: nach dem heutigen Stand der Technik hergestellte Fallschutzplatten;
- Fig. 2A und 2B: ein erfindungsgemässes Belagsmaterial, in dem innerhalb der Zwischenschicht elastische Elemente rechteckige Hohlräume ausbilden;
- Fig. 3A bis 3E: Beispiele für ein erfindungsgemässes Belagsmaterial, indem innerhalb der Zwischenschicht elastische Elemente zylinderförmige Hohlräume ausbilden;
- Fig. 3F und 3G: ein erfindungsgemässes Belagsmaterial, wobei die Zwischenschicht spiralförmige elastische Elemente enthält;
- Fig. 3H: ein zylinderförmiges elastisches Element mit Aussparungen;
- Fig. 4A: ein erfindungsgemässes Belagsmaterial, in dem die Zwischenschicht ein elastische Element enthält, das aus einem wellenförmig verformten flächigen Material gebildet ist;
- Fig. 4B: ein wellenförmiges elastisches Element;
- Fig 4C: ein erfindungsgemässes Belagsmaterial mit einer zweilagigen Zwischenschicht enthaltend je ein wellenförmiges elastisches Element;
- Fig. 4D und 4E: ein erfindungsgemässes Belagsmaterial, mit einem wellenförmigen elastischen Element, das metallisch oder mit anderen Materialien verstärkt ist;
- Fig. 5A und 5B: ein erfindungsgemässes Belagsmaterial mit einer mehrlagigen Zwischenschicht enthaltend je ein plattenförmiges elastisches Element mit Aussparungen;
- Fig. 5C: ein plattenförmiges elastisches Element mit Aussparungen
- Fig. 6: ein erfindungsgemässes Belagsmaterial in dem das elastische Element der Zwischenschicht gitterförmig ist;
- Fig. 7A bis 7C: Momentaufnahmen eines Verfahrens zur Herstellung eines erfindungsgemässen Belagsmaterials mit wellenförmigen elastischen Elementen;
- Fig. 8: Momentaufnahmen eines Verfahrenes zur Herstellung eines erfindungsgemässen Belagsmaterials mit plattenförmigen elastischen Elementen.

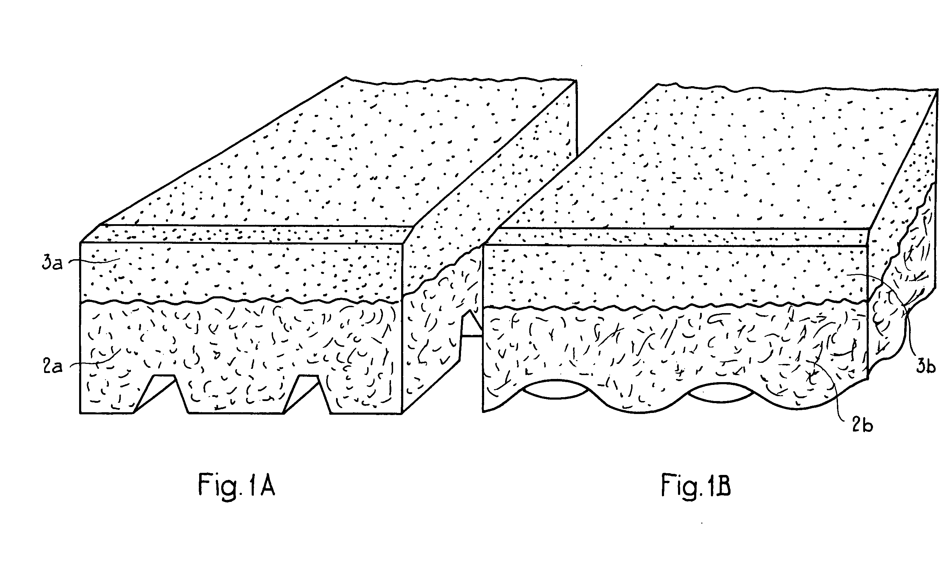

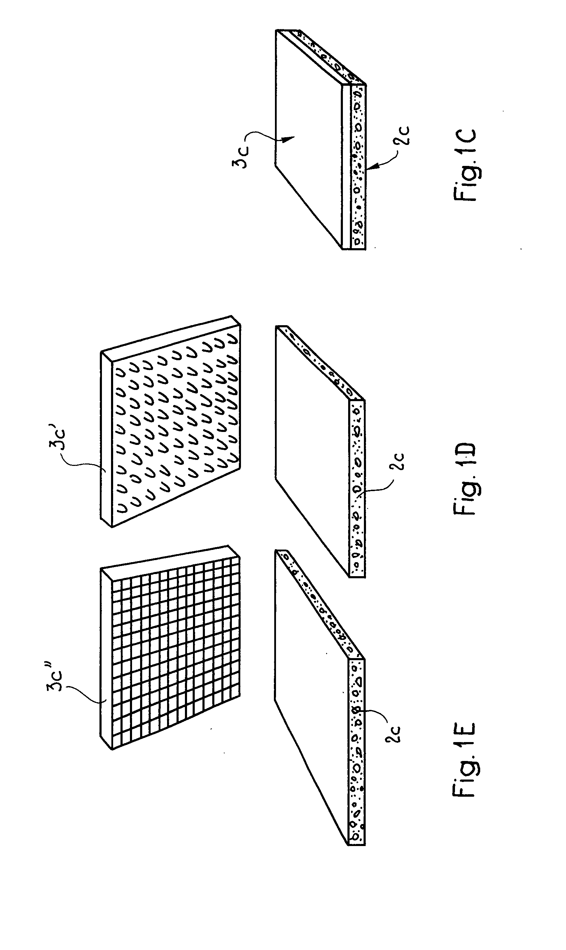

Fig. 1A und 1B stellen herkömmliche Fallschutzplatten mit einer Grundschicht 2a, und einer Deckschicht 3a dar. Die Deckschicht 3a weist eine gute Rutschfestigkeit auf und die Farbgebung kann den individuellen Bedürfnissen angepasst werden. Durch die Elastomere enthaltende Grundschicht 2a haben diese herkömmlichen Fallschutzplatte kraftabbauende Eigenschaften.

Die in Fig. 1B gezeigte Ausführungsform unterscheidet sich von der in Fig 1A gezeigten Ausführungsform durch andere Aussparungen in der Grundschicht, die den Kraftabbau verbessern.

Die in Fig. 1C gezeigte Ausführungsform stellt eine herkömmliche Fallschutzplatte mit einer Grundschicht 2c aus Beton und einer Deckschicht 3c aus einem Elastomer dar. Die Grundschicht 2c ermöglicht das flächige Verlegen der herkömmlichen Fallschutzplatten. Die Deckschicht 3c kann verschiedene Arten von Aussparungen haben (siehe Fig. 1D und Fig. 1E)

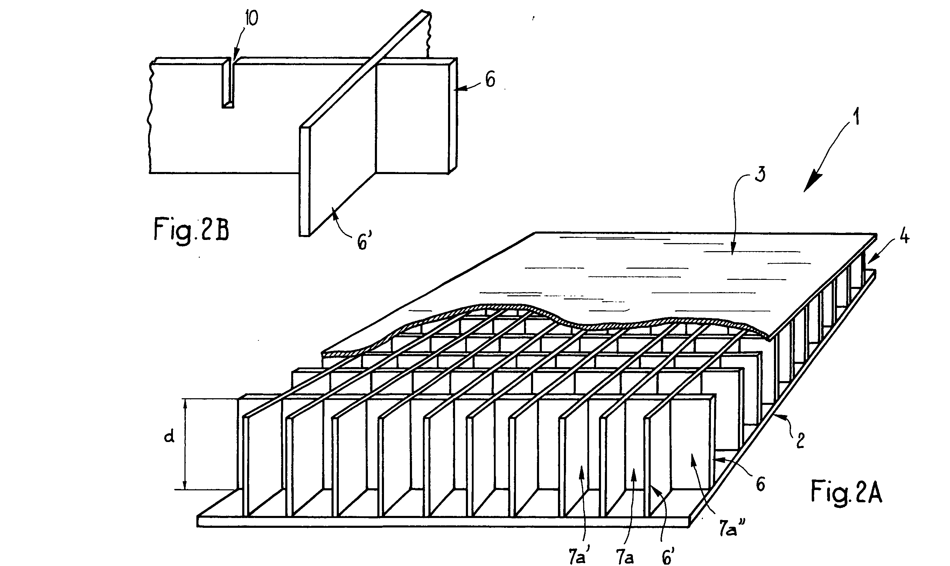

Fig. 2A zeigt eine erste Ausführungsform des erfindungsgemässen Belagsmaterial 1. Die Deckschicht 3 befindet sich in einem Abstand d zu der Grundschicht 2. Zwischen der Grundschicht 2 und der Deckschicht 3 befindet sich die Zwischenschicht 4, die streifenförmige elastische Elemente 6 und 6' enthält. Die streifenförmigen elastischen Elemente 6 und 6' sind bei den Aussparungen 10 ineinandergesteckt (siehe Fig. 2B), sodass durch die streifenförmigen elastischen Elemente 6 und 6' ein gleichmässiges Gitter ausgebildet wird. Durch die Aussparungen 10 sind die streifenförmigen elastischen Elemente 6 und 6' so aneinander befestigt, dass ein seitliches Verrutschen nicht mehr möglich ist. Die Grundschicht 2 und die Deckschicht 3 sind mit der Zwischenschicht 4 bzw. der Ober- bzw. Unterkanten der streifenförmigen elastischen Elementen 6 und 6' verbunden. Durch die streifenförmigen Elemente 6 und 6', die Grundschicht 2 und die Deckschicht 3 werden quaderförmige Hohlräume ausgebildet. Der Hohlraum 7a kommuniziert mit den daneben liegenden Hohlräumen 7a' und 7a", so dass nach Einwirkung von Druck auf die Deckschicht die Luft seitlich d.h. zwischen der Grundschicht und der Deckschicht bei den Aussparungen 10 langsam entweicht und bei nachlassendem Druck wieder zeitverzögert eintritt.

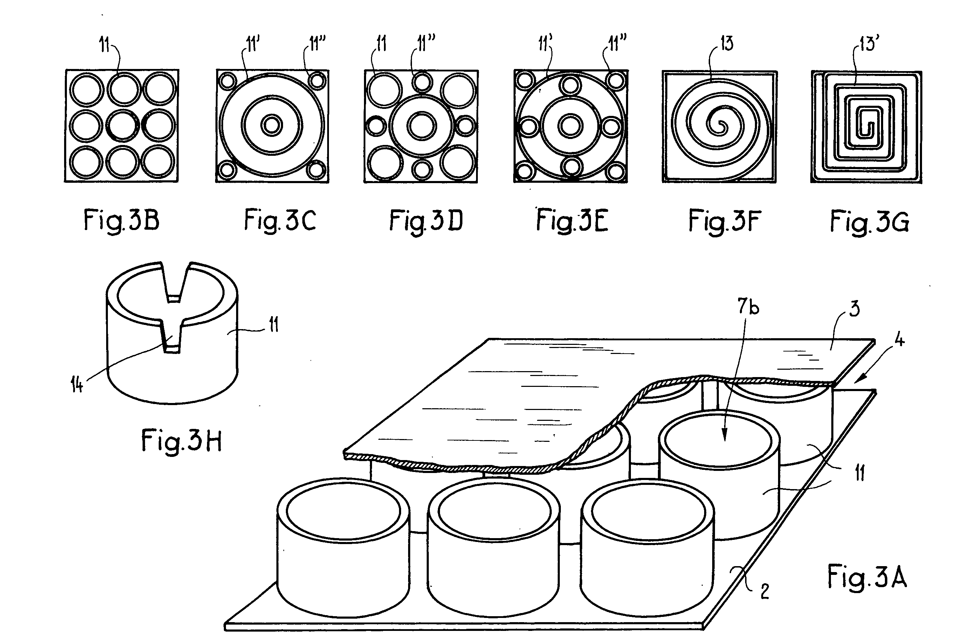

In Fig. 3A enthält die Zwischenschicht 4 zylinderförmige elastische Elemente 11. Ein zylinderförmiges elastisches Element 11 ist mit der Grundschicht 2 und der Deckschicht 3 so verbunden, dass sich ein zylinderförmiger Hohlraum 7b ausbildet. Bei Druckeinwirkung auf die Deckschicht 3 wird das zylinderförmige elastische Element verformt, dass eine Wölbung im Zylindermantel entsteht und die Höhe h des zylinderförmigen elastischen Elementes 11 verringert wird. Sobald der Druck auf die Deckschicht 3 wegfällt, nimmt das zylinderförmige elastische Element 11 seine ursprüngliche Form wieder ein. Die zylinderförmigen elastischen Elemente 11 sind beispielsweise aus einem flächigen Material hergestellt, das zylinderförmig verklebt und anschliessend geschnitten werden. Dadurch können die zylinderförmigen elastischen Elemente 11 in unterschiedlichen Höhen hergestellt werden, was eine individuelle Wahl der Elastizität und damit eine Anpassung an unterschiedliche Fallhöhen ermöglicht. Für eine optimale Stossdämpfung werden vorzugsweise zylinderförmige elastische Elemente 11 mit unterschiedlichem Durchmesser gewählt. In den Figuren 3B-3E werden Beispiele für verschiedene Durchmesser und Anordnungsmöglichkeiten der zylinderförmigen elastischen Elemente 11, 11' und 11" dargestellt. Durch eine zusätzliche Aussparung 14 (Fig. 3H) in den zylinderförmigen elastischen Elementen 11 lässt sich die stossdämpfende Wirkung weiter regulieren, da dadurch bei Druckeinwirkung eine stärkere Verformung der zylinderförmigen elastischen Elemente möglich ist.

In Fig. 3F und 3G ist ein Belagsmaterial jeweils mit einem spiralförmig ineinander gedrehten elastischen Element 13 bzw. 13' dargestellt. Der Hohlraum ist in diesem Fall das Innere der Spirale.

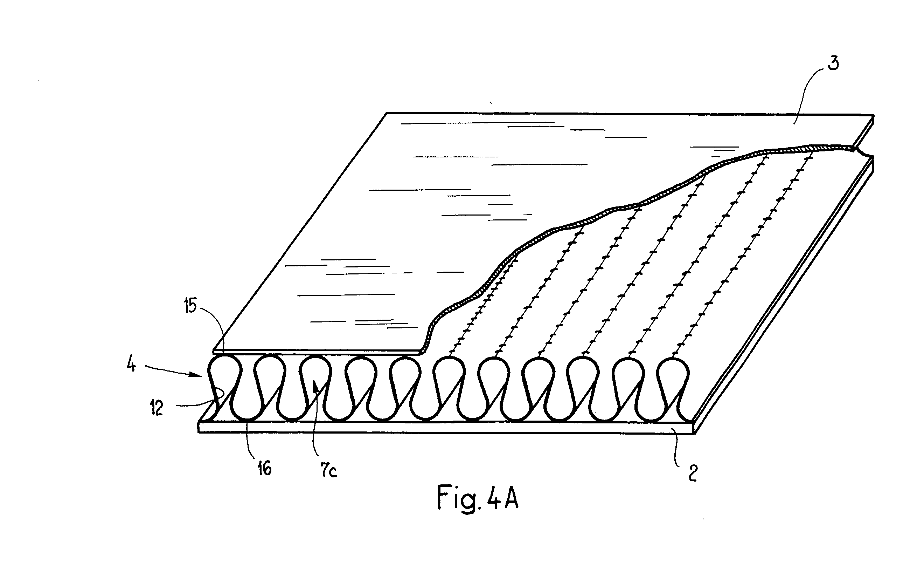

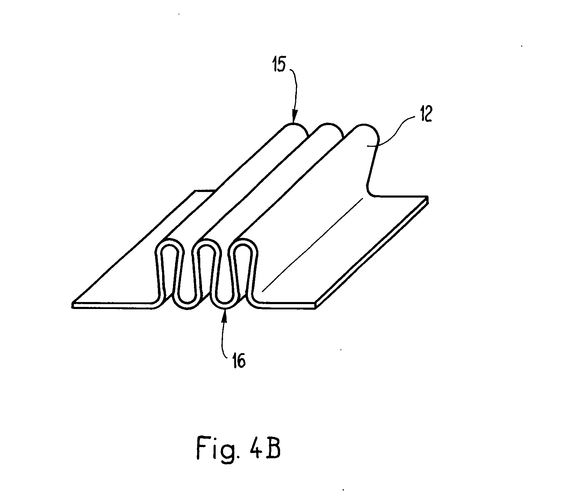

In Fig. 4a enthält die Zwischenschicht 4 ein elastisches Element 12, das aus einem wellenförmig verformten flächigen Material gebildet ist. Das wellenförmige elastische Element 12, das in Fig. 4B vergrössert dargestellt ist, wird auf dem Wellenberg 15, d.h. im oberen Bereich des wellenförmigen elastischen Elementes 12, mit der Deckschicht 3 und im Wellental 16, d.h. im unteren Bereich des wellenförmigen elastischen Elementes 12, mit der Grundschicht 2 verbunden. Zwischen jeweils benachbarten Wellenbergen 15 und Wellentälern 16 befinden sich Hohlräume 7c.

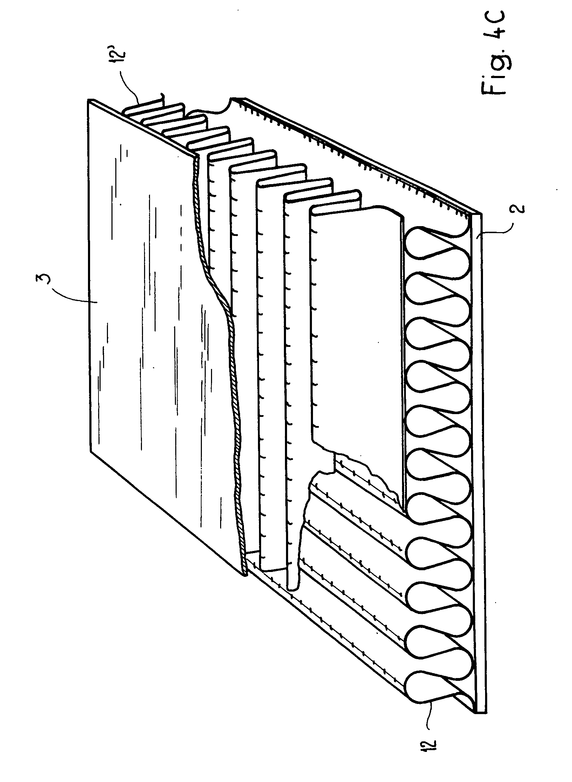

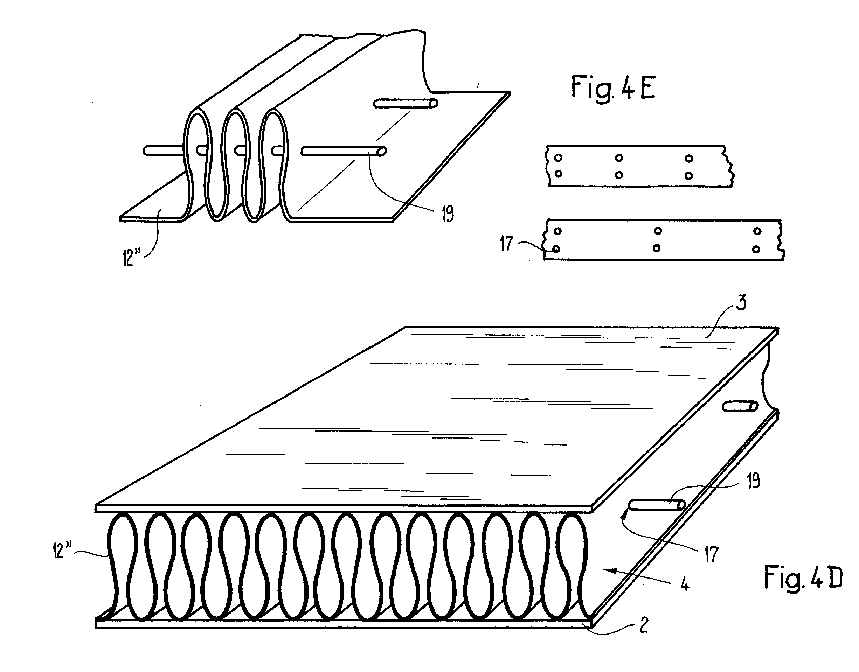

In Fig. 4C enthält die Zwischenschicht 4 zwei Lagen, die jeweils ein wellenförmiges elastisches Element 12 und 12' enthalten. Die wellenförmigen elastischen Elemente 12 und 12' sind etwa 90° zueinander verdreht. Dadurch kann eine herausragende Dämpfungseigenschaft erzielt und das wellenförmige elastische Element 12 stabilisiert werden.

In Fig. 4D enthält die Zwischenschicht 4 ein elastisches Element 12", das aus einem wellenförmig verformten flächigen Material gebildet ist. Durch das wellenförmige elastische Element 12" ist eine Querverstrebung 19 eingefügt, die vorgefertigte Löcher durchdringt (siehe Fig. 4E). Die Querverstrebung 19 dient zur Stabilisierung und zur Definition der Höhe des wellenförmigen elastischen Elementes 12". Die Zwischenschicht 4 ist mit der Grundschicht 2 und der Deckschicht 3 wie in Fig. 4A gezeigt verbunden.

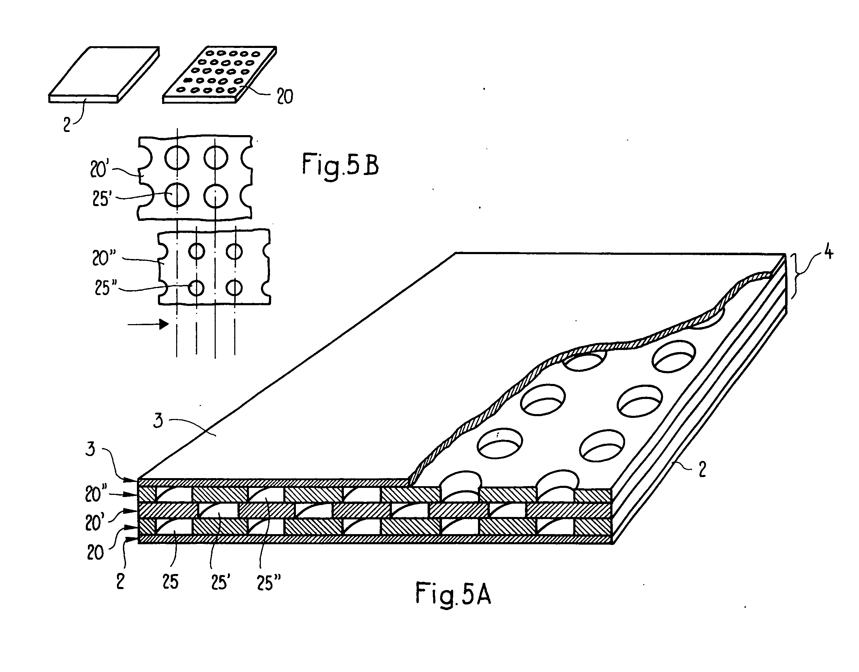

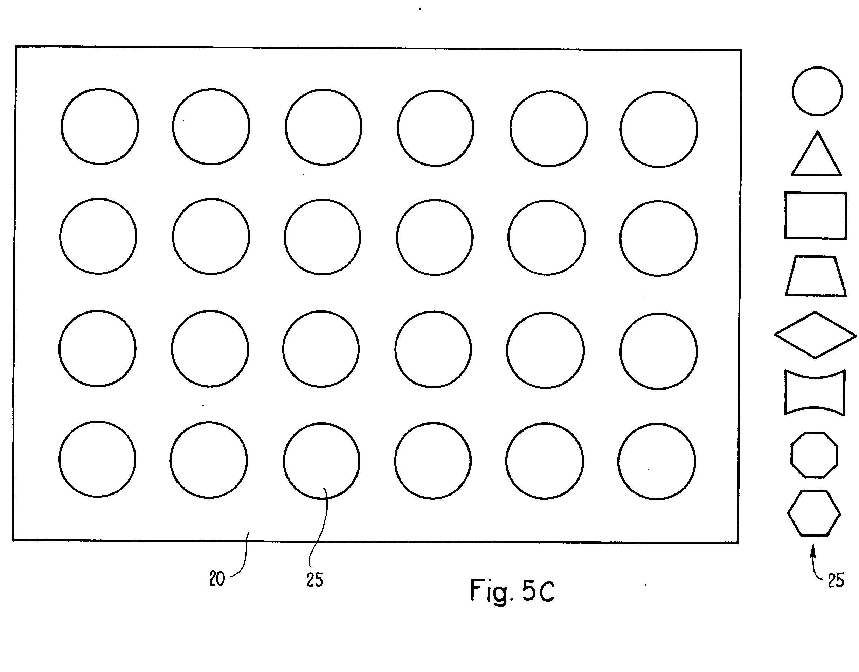

In Fig. 5 besteht die Zwischenschicht 4 aus drei Lagen mit plattenförmigen elastischen Elementen 20, 20' und 20", die Aussparungen 25, 25' und 25" aufweisen. Die plattenförmigen elastische Elemente 20, 20' und 20'' mit den Aussparungen 25, 25' und 25" sind vorzugsweise so übereinander angeordnet, dass die Aussparungen 25 des plattenförmigen elastischen Elements 20 ganz oder teilweise durch die darüberliegende nächste Lage mit dem elastischen Element 20' mit den Aussparungen 25' abgedeckt werden. Durch ein Versetzen der Lagen kann die Dämpfungswirkung verändert werden. Das elastische Element 20 mit Aussparungen 25 wird beispielsweise durch Herausstanzen der Aussparungen 25 aus einem flächigen Material hergestellt. Die Aussparungen 25 können jede beliebige Form haben, wie z.B. Kreise, Dreiecke, Vierecke, Rechtecke, Rauten, Ziegelform, Achteck, Sechsecke etc. (siehe Fig. 5C). Die Form der Aussparungen 25 in den verschiedenen Lagen ist nicht zwingend gleich.

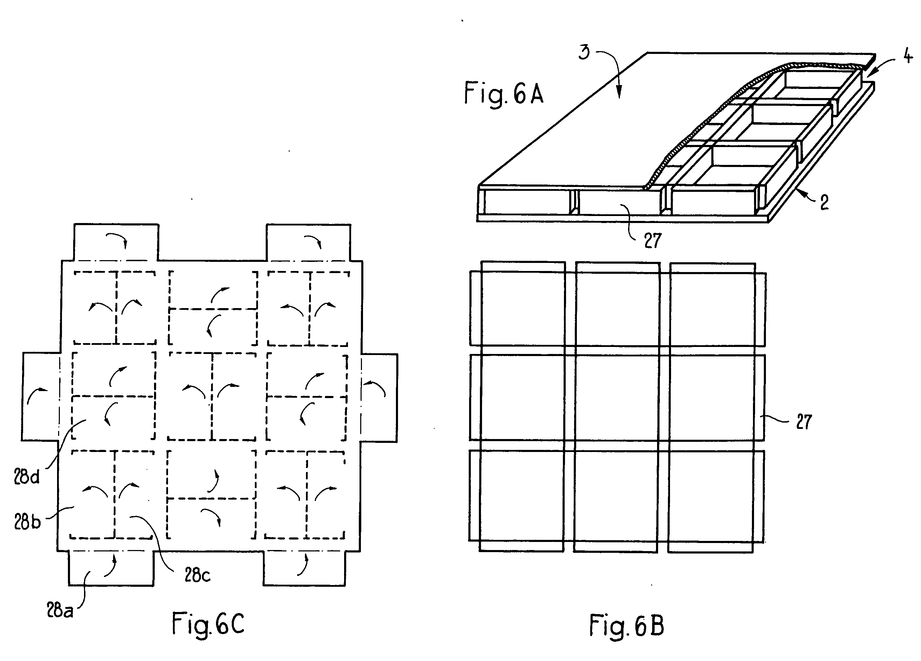

Fig. 6A zeigt eine weitere Ausführungsform des erfindungsgemässen Belagsmaterials. Zwischen der Grundschicht 2 und der Deckschicht 3 befindet sich die Zwischenschicht 4, die ein gitterförmiges elastisches Element 27 enthält (siehe auch Obenansicht des gitterförmigen Elementes 27 in Fig. 6B). Von einer in Fig. 6C dargestellten gestanzten Platte 26 werden die Stanzteile (28a-28d) so aufgeklappt und befestigt, dass sich das gitterförmige elastische Element 27 ausbildet.

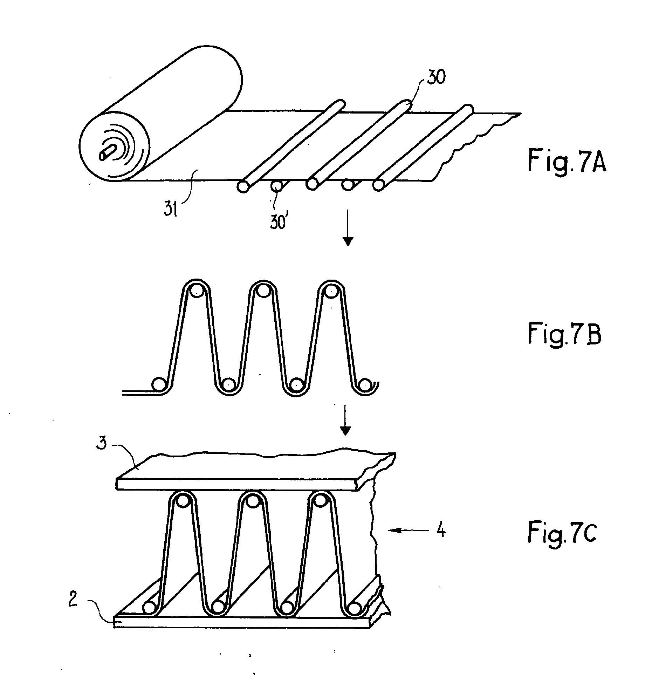

Fig. 7A - 7C stellen ein erfindungsgemässes Verfahren zur Herstellung eines in Fig. 4A dargestellten Belagsmaterials dar. In einem ersten Schritt werden alternierend auf und unter das flächige Material 31 Arme 30 und 30' gelegt. Anschliessend werden die über dem flächigen Material 31 liegenden Arme 30 nach unten und die unter dem flächigen Material 31 liegenden Arme 30' nach oben bewegt. Dadurch entsteht das wellenförmige elastische Element 12 (siehe Fig 7B). Die Wellenberge 15 und das Wellentäler 16 werden anschliessend mit der Grundschicht 2 bzw. der Deckschicht 3 verbunden, vorzugsweise durch Verkleben. Nach dem Verbinden des wellenförmigen elastischen Elementes 12 mit der Grundschicht 2 und der Deckschicht 3 werden die Arme 30 und 30' entfernt, so dass das fertige erfindungsgemässe Belagsmaterial 1 entsteht.

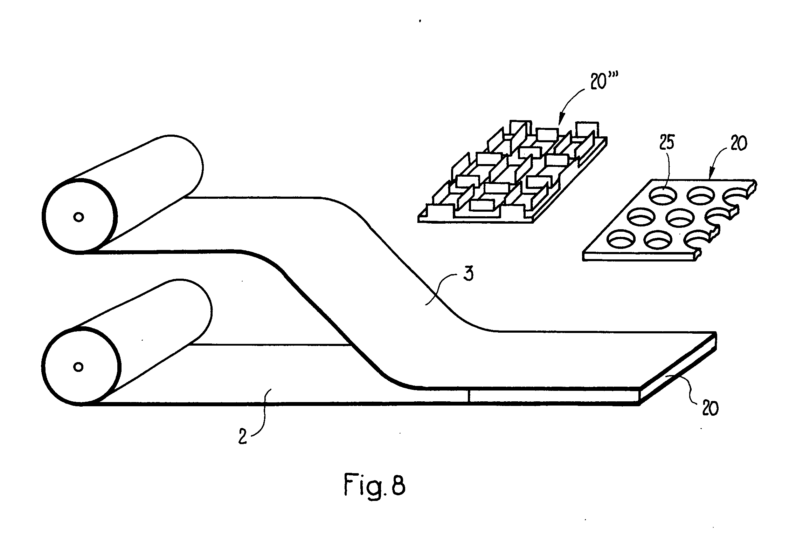

Fig. 8 stellt ein erfindungsgemässes Verfahren zur Herstellung einer in Fig. 5A dargestellten Bodenplatte dar. Dazu werden aus einem flächigen Material, das vorzugsweise in Form einer Bahn vorliegt, Aussparungen 25 vorzugsweise herausgestanzt, per Wasserstrahl oder durch Schneiden aus dem flächigen Material entfernt, so dass ein plattenförmiges elastisches Element 20 mit Aussparungen 25, wie in Fig. 5C dargestellt, entsteht. Wenigstens ein elastisches Element 20 mit Aussparungen wird anschliessend als Zwischenschicht zwischen die Grundschicht und die Deckschicht, die vorzugsweise ebenfalls in Form einer Bahn vorliegen, angeordnet und verbunden. Vorzugsweise werden Grundschicht, Deckschicht und Zwischenschicht durch Kaschieren miteinander verbunden. Als Kaschiermittel kommen geeignete Klebstoffe, wie zum Beispiel 2-Komponentenkleber (z.B. Polyurethan), Hotmelt-Kleber, Kontaktkleber, flexible Kleber, Wärmekleber (TPU) in Frage. Das so entstandene Belagsmaterial kann anschliessend nach vollständiger Trocknung als Bahn gerollt werden oder aber zu Platten gestanzt werden.

## Patentansprüche

1. Flächiges Belagsmaterial mit einer Grundschicht, einer Deckschicht und einer zwischen Grundschicht und Deckschicht angeordneten Zwischenschicht, **dadurch gekennzeichnet, dass** die Zwischenschicht wenigstens ein elastisches Element enthält, das aus einem flächigen Material hergestellt worden ist, wobei dieses elastische Element sich bei Druckeinwirkung auf die Deckschicht reversibel verformt, und dass das elastische Element innerhalb der Zwischenschicht alleine oder mit wenigstens einem anderen Element oder in Verbindung mit der Grundschicht und/oder der Deckschicht wenigstens einen Hohlraum ausbildet.

2. Belagsmaterial nach Anspruch 1, **dadurch gekennzeichnet, dass** die Zwischenschicht mehrere Lagen enthält und jede Lage jeweils wenigstens ein elastisches Element enthält.

3. Belagsmaterial nach einem der vorangehenden Ansprüche, **dadurch gekennzeichnet, dass** wenigstens zwei Hohlräume aneinander grenzen und miteinander kommunizieren.

4. Belagsmaterial nach einem der vorangehenden Ansprüche, **dadurch gekennzeichnet, dass** wenigstens ein elastisches Element aus einem wellenförmig verformten flächigen Material gebildet ist, wobei die Hohlräume jeweils zwischen benachbarten Wellentälern und Wellenbergen ausgebildet sind.

5. Belagsmaterial nach Anspruch 4, **dadurch gekennzeichnet, dass** auf das wellenförmig verformte elastische Element ein zweites wellenförmig verformtes elastisches Element aufgebracht ist, wobei das untere verformte elastische Element etwa um 90° verdreht zu dem oberen verformten elastischen Element angeordnet ist.

6. Belagsmaterial nach einem der Ansprüche 1 bis 3, **dadurch gekennzeichnet, dass** das elastische Element aus einem flächigen Material in Form eines Zylindermantels gebildet ist, das mit der Grundschicht und der Deckschicht einen zylinderförmigen Hohlraum ausbildet.

7. Belagsmaterial nach einem der vorangehenden Ansprüche **dadurch gekennzeichnet, dass** das Material des elastischen Elementes ausgewählt ist aus der Gruppe der Elastomeren.

8. Belagsmaterial nach einem der vorangehenden Ansprüche **dadurch gekennzeichnet, dass** die Zwischenschicht zusätzlich metallische Elemente enthält, die eine federnde Wirkung haben.

9. Belagsmaterial nach einem der vorangehenden Ansprüche **dadurch gekennzeichnet, dass** innerhalb der Zwischenschicht Verstärkungselemente angeordnet sind, die ein Überdehnen des wenigstens einen elastischen Elementes bei Überschreiten eines vorbestimmten Drucks auf die Deckschicht verhindern.

10. Fussbodenbelag hergestellt aus einem Belagsmaterial nach einem der Ansprüche 1 bis 9.

11. Verfahren zur Herstellung des Belagsmaterials nach einem der Ansprüche 1 bis 8, **dadurch gekennzeichnet, dass** aus einem flächigen Material wenigstens ein elastisches Element zur Herstellung der Zwischenschicht gefertigt wird, und die Grundschicht, die Zwischenschicht mit dem elastischen Element und die Deckschicht miteinander verbunden werden.

12. Verfahren nach Anspruch 11, **dadurch gekennzeichnet, dass** das flächige Material zur Herstellung des elastischen Elementes geschnitten, gestanzt und/oder geformt wird.

13. Verfahren nach Anspruch 11 **dadurch gekennzeichnet, dass** das flächige Material zur Herstellung des elastischen Elements derart verformt wird, dass es eine wellenförmige Form aufweist, und das wellenförmige elastische Element anschliessend mit der Deckschicht und der Grundschicht verbunden wird, wobei das wellenförmige elastische Element zwischen der Deckschicht und der Grundschicht angeordnet ist.
